# EUROPÄISCHE PATENTSCHRIFT

(11) **EP 3 807 564 B1**
(45) Veröffentlichungstag und Bekanntmachung des Hinweises auf die Patenterteilung: **15.03.2023**
(21) Anmeldenummer: 19728603.2
(22) Anmeldetag: 27.05.2019
(51) Int. Cl.: F16L 23/00, F16L 23/08

(54) **PROFILSCHELLE**
PROFILED CLAMP
COLLIER PROFILÉ

(30) Priorität: 13.06.2018 DE 102018114087
(43) Veröffentlichungstag der Anmeldung: 21.04.2021
(73) Patentinhaber: NORMA Germany GmbH, 63477 Maintal (DE)
(72) Erfinder: COTTLE, Ben, Newbury Berkshire RG14 6RU (GB); FOLKAR, Markus, 442 98 KODE (SE)
(74) Vertreter: Patentanwälte Olbricht Buchhold Keulertz
(86) Internationale Anmeldenummer: PCT/EP2019/063640
(87) Internationale Veröffentlichungsnummer: WO 2019/238400

(56) Entgegenhaltungen:
- WO-A1-2017/149104
- DE-A1-102011 101 506
- US-A1- 2017 254 454
- US-A1- 2017 284 578

## Beschreibung

Die Erfindung betrifft Profilschelle mit einem Dichtelement sowie eine Leitungsverbindungsanordnung mit einer derartigen Profilschelle.

Eine Profilschelle kann etwa zum fluiddichten Verbinden zweier Rohrenden eingesetzt werden, die mit radial nach außen gerichteten Flanschen ausgestattet sind und stirnseitig aneinander gefügt werden. Hierzu werden die Flansche zueinander positioniert und die Profilschelle mit einem spannbaren, in der Regel geteilten Profilband wird auf die Flansche aufgesetzt. Die Verbindung wird durch Spannen der Profilschelle fixiert, indem axiale und radiale Haltekräfte auf die Flansche einwirken. Ein Profilband der Profilschelle weist hierfür üblicherweise einen mehr oder weniger U-förmigen oder einen V-förmigen Querschnitt auf, der mit den Flanschen in Flächenkontakt gerät.

Bei besonders beengten Einbauräumen kann es erforderlich sein, eine Profilschelle vor dem Spannen exakt auszurichten, um eine Überschneidung mit einem für andere Komponenten erforderlichen Bauraum zu verhindern. Eine gattungsgemäße Profilschelle wird beispielhaft in DE 10 2009 039 862 B4 gezeigt. Die US 2017/284578 A1 offenbart ein System zur Stoß-anStoß-Verbindung von zwei Rohren, wobei das System eine Schelle mit einem Spannband umfasst, wobei das Spannband eine Haltelasche umfasst, die einen Fixierabschnitt aufweist, durch welchen die Haltelasche an dem Spannband der Schelle fixiert wird und der sich im Wesentlichen axial zu einem Befestigungsabschnitt der Haltelasche erstreckt, durch welchen die Haltelasche an dem ersten Rohr befestigt werden kann. Die Haltelasche weist eine Wellung auf, die zwischen ihrem Fixierabschnitt und ihrem Befestigungsabschnitt liegt. Die Schelle kann mit einer Unterlegscheibe versehen sein, die die Verbindung zwischen den beiden Rohren abdichtet, wenn das System verspannt wird.

Aufgabe der Erfindung ist es, eine Profilschelle vorzuschlagen, die eine Positionierung an zumindest einer von miteinander zu verbindenden Komponenten auch bei beengten Einbauräumen erlaubt.

Die Merkmale der Erfindung sind im Anspruch 1 angegeben. Ausgestaltungen sind Gegenstand der Ansprüche 2 bis 6. Die Ansprüche 7 bis 9 betreffen eine Leitungsverbindungsanordnung, bei der eine erfindungsgemäße Profilschelle eingesetzt wird.

Zur Lösung der vorangehend genannten Aufgabe ist bei einer Profilschelle mit einem Profilband und einem ringförmigen Dichtelement vorgesehen, dass das Profilband mindestens eine radial außenliegende Positionierhilfe aufweist, welche einen federelastischen Auflageabschnitt zum Anschmiegen an ein Formmerkmal eines mit der Profilschelle koppelbaren Leitungsendes besitzt, die in einem axialen Versatz zu dem Profilband angeordnet ist.

Das Profilband kann sich erfindungsgemäß folglich mithilfe mindestens einer Positionierhilfe an einem Leitungsende abstützen. Das Leitungsende kann ein bestimmtes Formmerkmal aufweisen, das insbesondere an einem radial außenliegenden Bereich des Leitungsendes angeordnet ist und dort von der Positionierhilfe zum Anschmiegen verwendet wird. Die Positionierhilfe weist einen federelastischen Auflageabschnitt auf, welcher in seiner Form an das betreffende Formmerkmal angepasst ist. Durch den axialen Versatz kann sich die Positionierhilfe von dem Profilband zu dem Leitungsende hin erstrecken. Das Anschmiegen einer Auflagefläche des Auflageabschnitts führt dazu, dass zumindest in der Umfangsrichtung eine Haltekraft auf das Profilband aufgebracht wird, die zum Beibehalten der momentanen Position führt. Ein Anwender kann beim Aufsetzen der Profilschelle zudem haptisch unmittelbar registrieren, wenn sich die Profilschelle in ihrer vorgesehenen Position befindet und die mindestens eine Positionierhilfe an dem betreffenden Formmerkmal angeordnet ist. Die Elastizität der Positionierhilfe führt indes dazu, dass beim Verspannen des Profilbandes die Positionierhilfe der Verspannbewegung folgen kann. Der beim Verspannen geringer werdende Durchmesser des Profilbandes verursacht lediglich eine elastische Verformung der Positionierhilfe und beeinträchtigt weder das Verspannen noch das korrekte Ausrichten des Profilbandes.

In einer vorteilhaften Ausführungsform ist die mindestens eine Positionierhilfe ein separates Bauteil, welches mit dem Profilband verbunden ist. Durch die Verwendung eines separaten Bauteils ist es leicht möglich, unabhängig von der Ausführung des Profilbandes die Materialeigenschaften der Positionierhilfe zu wählen. Das Material könnte von dem Material des Profilbandes abweichen. Alternativ oder zusätzlich dazu kann auch die Materialstärke abweichen. Die Positionierhilfe kann an jeden Anwendungszweck angepasst werden, indem die Materialeigenschaften und die Form entsprechend ausgewählt werden.

In einer besonders bevorzugten Ausführungsform weist das Profilband mindestens zwei umfangsseitig voneinander beanstandete Positionierhilfen auf. Die Position des Profilbandes an dem Leitungsende wird folglich durch mindestens zwei umfangsseitig wirkende Haltekräfte gehalten. Die anfängliche Positionierung der Profilschelle ist hierdurch weiterhin leichter durchzuführen als bei der Verwendung lediglich einer einzelnen Positionierhilfe. Zudem können die zwei oder mehr Positionierhilfen geometrisch recht einfach ausgestaltet sein, denn mehrere Positionierhilfen können umfangsseitig Haltekräfte in jeweils eine einzige, aber insgesamt unterschiedliche Richtungen bewirken. Eine erste Positionierhilfe könnte also eine Haltekraft in einer ersten Richtung bewirken, während eine zweite Positionierhilfe eine Haltekraft in einer zweiten Richtung bewirkt, die der ersten Richtung entgegengesetzt ist. Die Auflageabschnitte beider Positionierhilfen könnten sich also in der jeweils entgegengesetzten Richtung frei bewegen und müssen die Profilschelle lediglich in einer einzigen umfangsseitigen Richtung halten bzw. führen.

Bevorzugt ist die Positionierhilfe einstückig aus einem Blech hergestellt. Ein Blech kann durch eine bestimmte Formgebung ein federelastisches Verhalten aufweisen, das an den entsprechenden Anwendungszweck angepasst ist. Die Kosten für die Herstellung einer Positionierhilfe sind außerdem minimal, da sich Blech leicht und kostengünstig verarbeiten lässt. Zudem lassen sich aus einem Blech hergestellte Positionierhilfen temperatur- und vibrationsfest gestalten.

In einer vorteilhaften Ausführungsform weist die Positionierhilfe einen Befestigungsabschnitt auf, der zum Anbringen an einem äußeren Umfang des Profilbandes ausgebildet ist, wobei der Auflageabschnitt an einem von dem Befestigungsabschnitt abgewandten Ende der Positionierhilfe angeordnet ist. Der Befestigungsabschnitt lässt sich zur Befestigung der Positionierhilfe an dem Profilband ausgestalten. Je nach Art und Ausführung der Befestigung kann die Ausbildung des Befestigungsabschnitts variieren. Für die Befestigung des Befestigungsabschnitts sind keine hochfesten Verbindungen notwendig, da nur recht geringe Kräfte auf die Positionierhilfe wirken. Je nach Anwendung der erfindungsgemäßen Profilschelle kann es jedoch ratsam sein,

Löt- oder Schweißverbindungen einzusetzen, welche insbesondere temperaturfest sind. Der Auflageabschnitt kann an das Formmerkmal eines betreffenden Leitungsendes angepasst sein. Zwischen dem Auflageabschnitt und dem Befestigungsabschnitt kann ein gewisser Übergangsbereich angeordnet sein, der beide Abschnitte miteinander verbindet.

Bevorzugt ist der Auflageabschnitt als streifenförmige Lasche ausgebildet. Die Positionierhilfe könnte folglich einen starr mit dem Profilband verbundenen Befestigungsabschnitt und eine sich hiervon erstreckende Lasche aufweisen, die insbesondere streifenförmig ist. Eine streifenförmige Lasche kann eine zumindest weitgehend konstante Breite aufweisen. Ein Ende des Auflageabschnitts, das dem Befestigungsabschnitt entgegengesetzt angeordnet ist, kann frei von dem Profilband bzw. der Profilschelle abstehen. Durch diese Form wird auf mechanisch sehr einfache Weise das gewünschte Federverhalten verursacht.

Der Auflageabschnitt verläuft schräg zu einer Umfangsrichtung des Profilbandes. Die Umfangsrichtung ist eine Richtung, die dem von der Profilschelle definierten Umfang folgt. Eine hierzu schräge Richtung könnte in einer Umfangsebene liegen, wobei eine Erstreckungsrichtung des Auflageabschnitts schräg zu einer Tangente des Umfangs des Profilbandes am Schnittpunkt mit der Erstreckungsrichtung des Auflageabschnitts ist. Die schräge Richtung umfasst auch Richtungen, die nicht parallel zu der Umfangsebene des Profilbandes liegen. Selbstverständlich kann ein Auflageabschnitt auch in mehrere Richtungen schräg verlaufen, je nach Anforderung an den Auflageabschnitt.

Der Auflageabschnitt ist radial nach innen gebogen oder geknickt. Dies betrifft eine neutrale Position der Positionierhilfe, d.h. in einem unbelasteten Zustand, insbesondere bei geöffneter Profilschelle. Durch die nach innen gebogene oder geknickte Form wird die gewünschte Federkraft generiert, welche stets radial nach innen wirkt.

Alternativ oder zusätzlich dazu ist der Auflageabschnitt in axialer Richtung gebogen oder geknickt. Der Auflageabschnitt kann also mehr oder weniger entlang der Axialrichtung der Profilschelle gebogen oder geknickt sein. Hierdurch ergibt sich eine Federkraft in axialer Richtung. Die eingangs genannte Aufgabe wird außerdem durch eine Leitungsverbindungsanordnung mit einem Leitungsende, auf den eine Profilschelle nach einem der Ansprüche 1 bis 6 angeordnet ist, gelöst. Die Profilschelle kann bevorzugt auf dem Leitungsende bzw. einem daran angeordneten Flansch vormontiert werden und dort in noch nicht oder kaum gespanntem Zustand gehalten werden, bis sie mit einem zweiten Leitungsende verbunden wird.

Wie vorangehend dargelegt kann das Leitungsende mindestens ein umfangsseitiges Formmerkmal aufweisen, an das sich die mindestens eine Positionierhilfe anschmiegt. Das Formmerkmal ist dabei als jegliche geometrische Eigenschaft des Leitungsendes zu verstehen, die einen Auflageabschnitts dazu befähigt, sich an dem Leitungsende abzustützen bzw. sich darauf aufzulegen. Das Formmerkmal sollte dabei so prägnant sein, dass insbesondere eine in Umfangsrichtung wirkende Kraft durch eine Positionierhilfe in die Profilschelle eingeleitet werden kann. Bei einer Montage der Profilschelle wird diese dadurch in eine vorbestimmte Position gedrängt. Das Formmerkmal kann an einem an dem Leitungsende ausgebildeten Flansch angeordnet sein.

Dabei ist besonders bevorzugt, dass das Formmerkmal ein Vorsprung oder eine Kerbe ist. Der Vorsprung muss nicht zwangsläufig ausschließlich für den Zweck der Positionierung hergestellt werden. Vielmehr könnte es sich anbieten, eine Positionierhilfe an bereits vorhandene Vorsprünge anzupassen, die zur Halterung des Leitungsendes, als Anschlussöffnungen von Sensorleitungen oder ähnliche Zwecke verwendet werden. Dies betrifft nicht nur die Form der Positionierhilfe, sondern auch ihre Position an dem Profilband oder, im Falle mehrerer Positionierhilfen, ihrer umfangsseitigen Verteilung. Dennoch wäre es möglich, eine Kerbe eigens für die Positionierung mithilfe von Positionierhilfen vorzusehen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine nicht unter die Ansprüche fallende Profilschelle in einer schematischen, dreidimensionalen Darstellung
- Fig. 2: ein Ausführungsbeispiel einer erfindungsgemäßen Profilschelle in einer dreidimensionalen Darstellung, wobei die Positionierhilfe in axialer Richtung gebogen ist; und
- Fig. 3a+3b: ein weiteres Ausführungsbeispiel einer erfindungsgemäßen Profilschelle in einer dreidimensionalen Darstellung, wobei die Positionierhilfe in radialer Richtung gebogen ist.

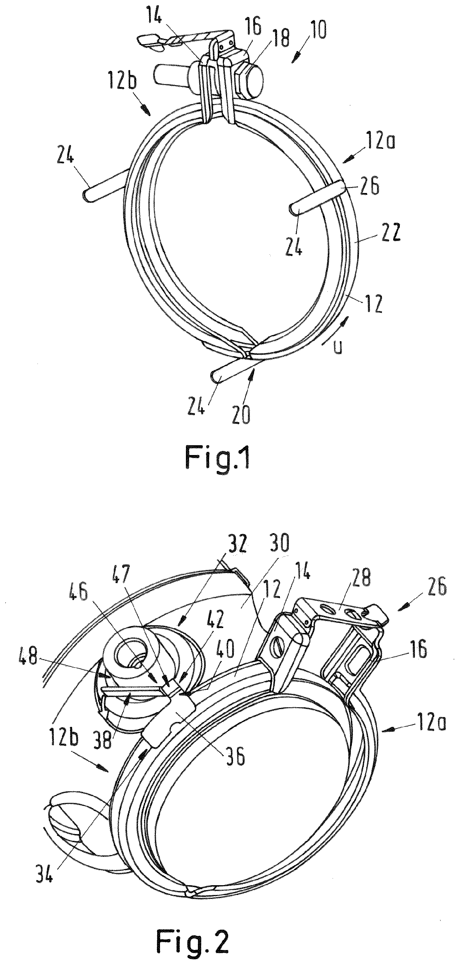

Fig. 1 zeigt eine Profilschelle 10, die ein Profilband 12 mit zwei Spannköpfen bzw. Spannbacken 14 und 16 aufweist. Ein Spannelement 18 verbindet beide Spannköpfe 14 und 16 miteinander und ist dazu ausgebildet, das Profilband 12 zu verspannen. Letzteres ist in zwei Hälften 12a und 12b unterteilt, welche an einer Seite, die den Spannköpfen 14 und 16 entgegengesetzt ist, mittels eines Brückenelements 20 miteinander verbunden sind. Hierdurch wird eine gewisse Elastizität bereitgestellt, durch die ein einfaches Scharnier gebildet wird, welches eine Relativbewegung beider Hälften 12a und 12b beim Verspannen erlaubt.

Das Profilband 12 ist an einem äußeren Umfang 22 mit mehreren umfangsseitig verteilten Positionierhilfen 24 ausgestattet. Diese sind in der schematischen Darstellung sehr vereinfacht als streifenförmige Bleche gezeigt, welche sich in axialer Richtung von dem äußeren Umfang 22 erstrecken. Es ist jedoch in dieser Darstellung ersichtlich, dass die Positionierhilfen 24 als separate Bauteile hergestellt sind und über Befestigungselemente 26 mit dem Profilband 12 verbunden sind. Hierdurch lassen sich die Positionierhilfen 24 aus einem anderen Werkstück herstellen lassen, als das Profilband 12. Dadurch lassen sich beispielsweise unterschiedliche Materialstärken realisieren.

Die Positionierhilfen 24 können insbesondere aus einem metallischen Material hergestellt sein. Ziel ist, mit den Positionierhilfen 24 federelastische Elemente bereitzustellen, welche mit Formmerkmalen eines Leitungsendes (nicht gezeigt) in Berührung bringbar sind, um in Umfangsrichtung u eine Kraft aufzubringen, die eine Verdrehung der Profilschelle 10 bei ihrer Montage verhindert. Zudem sind die Positionierhilfen 24 ebenso dazu geeignet, eine vorgesehene Position an dem betreffenden Leitungsende einzunehmen. Die Positionierhilfen 24 könnten hierfür etwa derart angeordnet sein, dass die Profilschelle 10 ausschließlich in einer vorgesehenen Position an dem Leitungsende anbringbar ist.

In der gezeigten, sehr vereinfachten Darstellung wirken die Positionierhilfen 24 aufgrund ihrer länglichen, streifenartigen Form als Blechfedern, die in einer radialen Richtung federn. Dies erlaubt das Anschmiegen der Positionierhilfen 24 an zugehörige Formmerkmale des Leitungsendes, wenn die Profilschelle 10 geöffnet ist. Beim Verspannen der Profilschelle 10 über das Spannelement 18 wird der Bewegung der Hälften 12a und 12b kein Widerstand entgegengesetzt und die Positionierhilfen 24 können radial nach außen ausfedern. Sie behalten dabei ihre Funktion der Positionierung, wenn die Profilschelle 10 wieder geöffnet wird. Dann können Sie in die ursprüngliche Position zurückfedern und sich dennoch an die Formmerkmale anschmiegen.

Fig. 2 zeigt ein Ausführungsbeispiel in Form einer Profilschelle 26. Auch hier ist ein Profilband 12 mit zwei Hälften 12a und 12b gezeigt, die über ein Spannelement 28 verspannbar sind. Figur 2 zeigt gleichzeitig ein Leitungsende 30, an dem die Profilschelle 26 angeordnet ist. Das Leitungsende 30 besitzt ein Formmerkmal 32 in Form eines Vorsprungs bzw. einer Durchführung oder eines Anschlusses für eine weitere Leitung. An der Profilschelle 26 befindet sich eine Positionierhilfe 34, die einen Befestigungsabschnitt 36 und einen Auflageabschnitt 38 besitzt. Der Befestigungsabschnitt 36 folgt der Form der Profilband-Hälfte 12b und weist an einem Eckbereich 40 eine Abkantung 42 auf, an die sich ein Übergangsbereich 44 zwischen dem Befestigungsabschnitt 36 und dem Auflageabschnitt 38 anschließt. Die Abkantung 42 ist derart ausgeführt, dass sich der Übergangsbereich 44 praktisch ausschließlich in radialer Richtung erstreckt, wobei zwischen dem Übergangsbereich 44 und dem Auflageabschnitt 38 ein Knick 46 von ungefähr 45° angeordnet ist. Der Auflageabschnitt 38 ist folglich in axialer Richtung geknickt. Dadurch wirkt die Positionierhilfe 34 in Umfangsrichtung und in axialer Richtung als Feder.

Beim Verspannen der Profilschelle 26 kann die Positionierhilfe 34 die Verspannbewegung praktisch nicht beeinträchtigen. Aufgrund des radialen Übergangsbereich 44 ist der Auflageabschnitt 38 in einem radialen Versatz zu dem Profilband 12 angeordnet und kann folglich entlang des Formmerkmals 32 rutschen. Selbst bei Erreichen einer verspannten Position der Profilschelle 26 befindet sich der Auflageabschnitt 38 radial noch außerhalb des Profilbandes 12. Dennoch kann durch Auflageabschnitt 38 eine präzise Positionierung der Profilschelle 26 an dem Leitungsende 30 vorgenommen werden.

Die Positionierhilfe 34 ist insbesondere aufgrund der Gestaltung des Auflageabschnitts 38 dazu geeignet, sich an die im Wesentlichen in radialer Richtung erstreckende Oberfläche 48 des Formmerkmals 32 anzuschmiegen. In dieser Darstellung ist aufgrund der Perspektive nicht ersichtlich, dass an der Hälfte 12a ebenso eine Positionierhilfe 34 angeordnet sein kann.

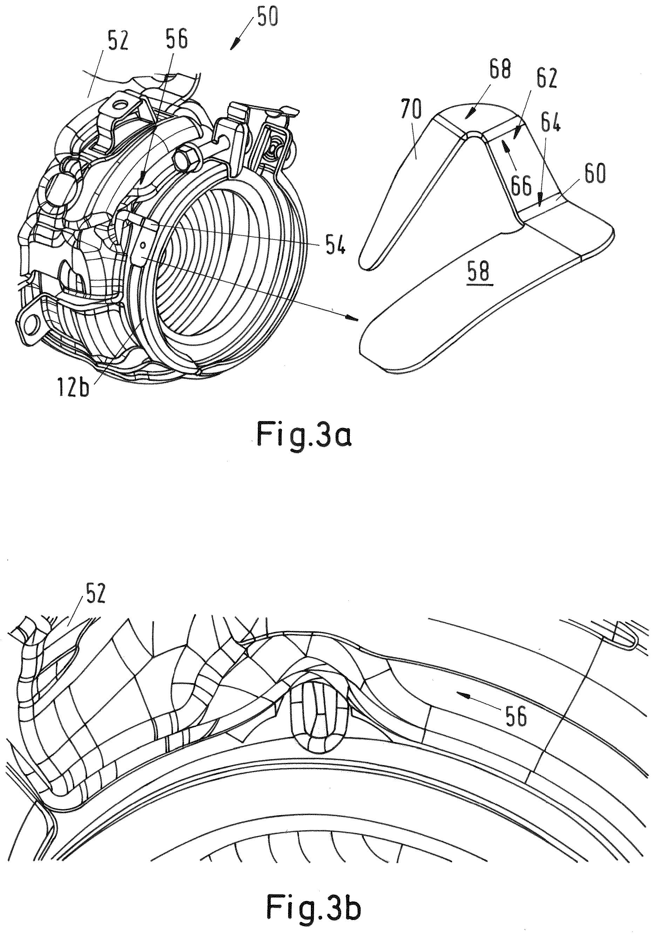

Fig. 3a zeigt ein weiteres Ausführungsbeispiel in Form einer Profilschelle 50, die an einem Leitungsende 52 positioniert ist. Dieses Ausführungsbeispiel demonstriert, dass eine Positionierhilfe für völlig unterschiedliche Ausführungen von Formmerkmalen angepasst werden kann.

Hier wird ebenso wie im vorherigen Ausführungsbeispiel eine Positionierhilfe 54 gezeigt, die auf ein Formmerkmal 56 angepasst ist. Das Formmerkmal 56 ist als eine Art Kerbe ausgeführt, die radial nach außen gerichtet ist. Die Positionierhilfe 54 weist einen Befestigungsabschnitt 58 auf, der mit der Hälfte 12b des Profilbandes 12 verbunden ist. In einem Eckbereich 60 des Befestigungsabschnitts 58 schließt sich ein Übergangsbereich 62 an, welcher nacheinander drei Knicke 64, 66 und 68 aufweist. Die beiden Knicke 64 und 66 verlaufen etwa weitgehend parallel zu der Umfangsrichtung u, so dass der Übergangsbereich 62 eine Art radial-axial verlaufende Rampe ausbildet, an die sich ein Plateau anschließt, dass etwa parallel zu dem Befestigungsabschnitt 58 verläuft. Der Knick 68 verläuft folglich parallel zu einer axialen Richtung. Hieran schließt sich ein Auflageabschnitt 70 an, der demgemäß in radialer Richtung geknickt ist.

Der Auflageabschnitt 70 bewirkt aufgrund seiner Form eine Federkraft in Umfangsrichtung bzw. radialer Richtung. Aufgrund seines axialen und radialen Versatzes zu dem Befestigungsabschnitt 58 kann das Formmerkmal 56 praktisch von dem Auflageabschnitt 70 eingeschlossen werden, wobei beim Spannen der Profilschelle 50 der Auflageabschnitt 70 sowie der Übergangsbereich 62 radial leicht nach außen ausfedern können. Der Verspannung der Profilschelle 50 wird folglich kein Widerstand entgegengesetzt.

Figur 3b zeigt schematisch das Formmerkmal 56, dessen kerbenartige Form hier sehr deutlich ersichtlich ist. Das Formmerkmal 56 kann durch gezieltes Auswölben des Leitungsendes 52 hergestellt werden. Dies könnte praktisch mit jedem beliebigen Leitungsende durchgeführt werden, so dass eine präzise Positionierung mittels einer Positionierhilfe durchführbar ist. Die Kerbe 56 muss nicht zwangsläufig durch Verformung des Leitungsendes erfolgen. Vielmehr kann auch lediglich ein Vorsprung aufgelötet oder aufgeklebt werden, der auch kerbenartig sein kann.

Die Erfindung ist nicht auf eine der vorbeschriebenen Ausführungsformen beschränkt, sondern in vielfältiger Weise gemäß den Ansprüchen abwandelbar.

### Bezugszeichenliste

- 10: Profilschelle
- 12: Profilband
- 12a, 12b: Profilbandhälften
- 14: Spannkopf
- 16: Spannkopf
- 18: Spannelement
- 20: Brückenelement
- 22: äußerer Umfang
- 24: Positionierhilfe
- 26: Profilschelle
- 28: Spannelement
- 30: Leitungsende
- 32: Formmerkmal / Vorsprung
- 34: Positionierhilfe
- 36: Befestigungsabschnitt
- 38: Auflageabschnitt
- 40: Eckbereich
- 42: Abkantung
- 44: Übergangsbereich
- 46: Knick
- 48: Radiale Oberfläche
- 50: Profilschelle
- 52: Leitungsende
- 54: Positionierhilfe
- 56: Formmerkmal / Kerbe
- 58: Befestigungsabschnitt
- 60: Eckbereich
- 62: Übergangsbereich
- 64: Knick
- 66: Knick
- 68: Knick
- 70: Auflageabschnitt
- u: Umfangsrichtung

## Patentansprüche

1. Profilschelle (10, 26, 50) mit einem Profilband (12) und einem ringförmigen Dichtelement, wobei das Profilband (12) zwei Spannköpfe (14, 16) aufweist, die über ein Spannelement (18, 28) miteinander verbunden sind, wobei das Profilband (12) mindestens eine radial außenliegende Positionierhilfe (24, 34, 54) aufweist, welche einen federelastischen Auflageabschnitt (38, 70) zum Anschmiegen an ein Formmerkmal (32, 56) eines mit der Profilschelle (10, 26, 50) koppelbaren Leitungsendes (30, 52) besitzt, die Positionierhilfe in einem axialen Versatz zu dem Profilband (12) angeordnet ist und sich durch den axialen Versatz von dem Profilband zu dem Leitungsende hin erstreckt, wobei der Auflageabschnitt (38, 70) schräg zu einer Umfangsrichtung (u) des Profilbands (12) verläuft, wobei der Auflageabschnitt (38, 70) radial nach innen gebogen oder geknickt und/oder in axialer Richtung gebogen oder geknickt ist.

2. Profilschelle (10, 26, 50) nach Anspruch 1, **dadurch gekennzeichnet, dass** die mindestens eine Positionierhilfe (24, 34, 54) ein separates Bauteil ist, welches mit dem Profilband (12) verbunden ist.

3. Profilschelle (10, 26, 50) nach Anspruch 1 oder 2, **dadurch gekennzeichnet, dass** das Profilband (12) mindestens zwei umfangsseitig voneinander beabstandete Positionierhilfen (24, 34, 54) aufweist.

4. Profilschelle (10, 26, 50) nach einem der vorhergehenden Ansprüche, **dadurch gekennzeichnet, dass** die Positionierhilfe (24, 34, 54) einstückig aus einem Blech hergestellt ist.

5. Profilschelle (10, 26, 50) nach einem der vorhergehenden Ansprüche, **dadurch gekennzeichnet, dass** die Positionierhilfe (24, 34, 54) einen Befestigungsabschnitt (36, 58) aufweist, der zum Anbringen an einem äußeren Umfang (22) des Profilbandes (12) ausgebildet ist, und wobei der Auflageabschnitt (38, 70) an einem von dem Befestigungsabschnitt (36, 58) abgewandten Ende der Positionierhilfe (24, 34, 54) angeordnet ist.

6. Profilschelle (10, 26, 50) nach einem der vorhergehenden Ansprüche, **dadurch gekennzeichnet, dass** der Auflageabschnitt (38, 70) als streifenförmige Lasche ausgebildet ist.

7. Leitungsverbindungsanordnung mit einem Leitungsende (30, 52), auf dem eine Profilschelle (10, 26, 50) nach einem der Ansprüche 1 bis 6 angeordnet ist.

8. Leitungsverbindungsanordnung nach Anspruch 7, **dadurch gekennzeichnet, dass** das Leitungsende (30, 52) mindestens ein umfangsseitiges Formmerkmal (32, 56) aufweist, an das sich die mindestens eine Positionierhilfe (24, 34, 54) anschmiegt.

9. Leitungsverbindungsanordnung nach Anspruch 8, **dadurch gekennzeichnet, dass** das Formmerkmal (32, 56) ein Vorsprung (32) oder eine Kerbe (56) ist.

## Claims

1. Profiled clamp (10, 26, 50) having a profiled band (12), and an annular sealing element, wherein the profiled band (12) has two tensioning heads (14, 16) which are connected to one another via a tensioning element (18, 28), wherein the profiled band (12) has at least one radially outer positioning aid (24, 34, 54) which has a spring elastic bearing portion (38, 70) for clinging to a shape feature (32, 56) of a line end (30, 52) which can be coupled to the profiled clamp (10, 26, 50), the positioning aid being arranged with an axial offset to the profiled band (12) and extending from the profiled band toward the line end by virtue of the axial offset, wherein the bearing portion (38, 70) extends obliquely to a circumferential direction (u) of the profiled band (12), wherein the bearing portion (38, 70) is bent or kinked radially inwardly and/or is bent or kinked in the axial direction.

2. Profiled clamp (10, 26, 50) according to Claim 1, **characterized in that** the at least one positioning aid (24, 34, 54) is a separate component which is connected to the profiled band (12).

3. Profiled clamp (10, 26, 50) according to Claim 1 or 2, **characterized in that** the profiled band (12) has at least two circumferentially spaced-apart positioning aids (24, 34, 54).

4. Profiled clamp (10, 26, 50) according to one of the preceding claims, **characterized in that** the positioning aid (24, 34, 54) is produced in one piece from a metal sheet.

5. Profiled clamp (10, 26, 50) according to one of the preceding claims, **characterized in that** the positioning aid (24, 34, 54) has a fastening portion (36, 58) which is designed for mounting on an outer circumference (22) of the profiled band (12), and wherein the bearing portion (38, 70) is arranged at an end of the positioning aid (24, 34, 54) that is directed away from the fastening portion (36, 58).

6. Profiled clamp (10, 26, 50) according to one of the preceding claims, **characterized in that** the bearing portion (38, 70) takes the form of a strip-shaped tongue.

7. Line connection arrangement having a line end (30, 52) on which a profiled clamp (10, 26, 50) according to one of Claims 1 to 6 is arranged.

8. Line connection arrangement according to Claim 7, **characterized in that** the line end (30, 52) has at least one circumferential shape feature (32, 56) to which the at least one positioning aid (24, 34, 54) clings.

9. Line connection arrangement according to Claim 8, **characterized in that** the shape feature (32, 56) is a projection (32) or a notch (56).

## Revendications

1. Collier profilé (10, 26, 50) avec une bande profilée (12) et un élément d'étanchéité annulaire, la bande profilée (12) présentant deux têtes de serrage (14, 16) qui sont reliées l'une à l'autre par l'intermédiaire d'un élément de serrage (18, 28), la bande profilée (12) présentant au moins un auxiliaire de positionnement (24, 34, 54) situé radialement à l'extérieur, qui possède une section d'appui élastique (38, 70) pour s'adapter à une caractéristique de forme (32, 56) d'une extrémité de conduite (30, 52) pouvant être couplée au collier profilé (10, 26, 50), l'auxiliaire de positionnement étant agencé avec un décalage axial par rapport à la bande profilée (12) et s'étendant à travers le décalage axial de la bande profilée vers l'extrémité de conduite, la section d'appui (38, 70) s'étendant en oblique par rapport à une direction circonférentielle (u) de la bande profilée (12), la section d'appui (38, 70) étant courbée ou pliée radialement vers l'intérieur et/ou courbée ou pliée dans la direction axiale.

2. Collier profilé (10, 26, 50) selon la revendication 1, **caractérisé en ce que** l'au moins un auxiliaire de positionnement (24, 34, 54) est un composant séparé qui est relié à la bande profilée (12).

3. Collier profilé (10, 26, 50) selon la revendication 1 ou 2, **caractérisé en ce que** la bande profilée (12) présente au moins deux auxiliaires de positionnement (24, 34, 54) espacés l'un de l'autre sur la circonférence.

4. Collier profilé (10, 26, 50) selon l'une quelconque des revendications précédentes, **caractérisé en ce que** l'auxiliaire de positionnement (24, 34, 54) est fabriqué en une seule pièce à partir d'une tôle.

5. Collier profilé (10, 26, 50) selon l'une quelconque des revendications précédentes, **caractérisé en ce que** l'auxiliaire de positionnement (24, 34, 54) présente une section de fixation (36, 58) qui est configurée pour être disposée sur une circonférence extérieure (22) de la bande profilée (12), et la section d'appui (38, 70) étant agencée à une extrémité de l'auxiliaire de positionnement (24, 34, 54) détournée de la section de fixation (36, 58) .

6. Collier profilé (10, 26, 50) selon l'une des quelconque revendications précédentes, **caractérisé en ce que** la section d'appui (38, 70) est configurée sous forme de patte en forme de bande.

7. Agencement de raccordement de conduites avec une extrémité de conduite (30, 52), sur laquelle est agencé un collier profilé (10, 26, 50) selon l'une quelconque des revendications 1 à 6.

8. Agencement de raccordement de conduites selon la revendication 7, **caractérisé en ce que** l'extrémité de conduite (30, 52) présente au moins une caractéristique de forme (32, 56) du côté de la circonférence, à laquelle s'adapte l'au moins un auxiliaire de positionnement (24, 34, 54) .

9. Agencement de raccordement de conduites selon la revendication 8, **caractérisé en ce que** la caractéristique de forme (32, 56) est une saillie (32) ou une encoche (56) .
